# EUROPEAN PATENT APPLICATION

(11) **EP 4 397 640 A1**
(43) Date of publication of application: **10.07.2024**
(21) Application number: 23196096.4
(22) Date of filing: 07.09.2023
(51) Int. Cl.: C04B 28/06

(54) **ULTRA-EARLY STRENGTH CONCRETE MIX**

(30) Priority: 07.09.2022 TR 202213958
(71) Applicant: Fibrobeton Yapi Elemanlari Sanayi Insaat Ve Ticaret Anonim Sirketi, 34810 Istanbul (TR)
(72) Inventor: MARASLI, MUHAMMED, 34810 ISTANBUL (TR); SUBASI, SERKAN, 81620 DUZCE (TR); OZDAL, VOLKAN, 34810 ISTANBUL (TR); COSKUN, KADER, 81100 DUZCE (TR); SEIS, MUHAMMET, 81620 DUZCE (TR)
(74) Representative: Yigiter, Zekiye Basak

(57) **Abstract**

The present invention relates to an ultra-early strength concrete mix comprising at least one fine aggregate and at least one set accelerator in addition to at least one cement material, said concrete comprising said set accelerator in a range of 5 to 15 wt% of the ultra-early strength concrete mix. The present invention further discloses a method for preparing an ultra-early strength concrete mix. The weight ratio of the fine aggregate to the cement material is in the range of 0.8 to 1.2.

## Description

### Technical Field

The invention relates to an ultra-early strength concrete mix, and a method for preparing this mix. In particular, the invention relates to a concrete mix allowing quick repair of damaged structures.

### Background

Cement and its products have four key properties that materials scientists are constantly working to improve. These are early strength, fast setting time, resistance to deterioration, and a good level of expansion to compensate for shrinkage. One of the major problems with the state of the art is that the techniques used to improve any one of these key properties can lead to the deterioration of another key property. For example, a cement made from Portland cement together with gravel aggregate, and intended to provide early strength is typically subject to shrinkage after drying. This is undesirable because, among other reasons, it leads to cracks that ultimately weaken the hardened concrete. Cracking is caused by excessive shrinkage and high hydration temperatures in thickly poured concrete. Unlike plaster powder and water, which upon being mixed simply dry without generating any heat, cement and water react with each other to generate heat. The rate of shrinkage can be controlled by increasing the amount of calcium aluminum sulfate in the clinker which expands upon hydration in the presence of free CaO and CaSO₄. However, literature searches show that sulfate-containing materials used to obtain an early high strength have unfavorable effects on concrete durability. Also, as seen in the current practices, coarse aggregates are preferred. Such coarse aggregates can have negative effects on the surface and internal structure of concrete. Therefore, achieving high performance with cement and cement products in the state of the art is only possible by developing a technique that provides a good performance in each of said key properties.

Another problem with the state of the art is that the shortest times required to reach early strength usually vary between 4-24 hours. Considering the common practices in the art, early strength studies generally involve mechanical tests carried out after 4 hours. For quick repairs, however, said 4-24 hour-long timeframes are too long. When a larger amount of cement substitute is used in order to shorten such timeframes to achieve early strength, on the other hand, this leads to high concrete temperatures, and large temperature differences between the concrete and its surroundings. And, this causes, in turn, capillary or structural cracks in the concrete, as noted earlier.

Also in the current practices, heat treatment is performed in order to reach the targeted strength level in a short time. One of the methods used to impart a permanent strength to concrete in a short time, or to cast concrete in cold weathers is steam curing. In steam curing, the curing chamber should be designed to be thermally insulated and airtight. The temperature and relative humidity in the curing chamber should be controlled separately. For the defense industry, an airport runway concrete, earthquake zones, or a damaged structure like a road or bridge, however, heat treatment applications are practically inaccessible and unusable in emergency situations.

One of the methods applied in the art for rapid reuse of concrete molds is the addition of set accelerator admixtures to mortar mix designs in the manufacturing process of precast concrete elements. However, such admixtures promote the occurrence of higher hydration temperatures. Such higher hydration temperatures cause, in turn, capillary and structural cracks in concrete.

CN103253902A discloses a method for preparing an ultra-early strength structure-reinforced mortar that provides a high early strength, a short demold time, a short curing time, and a high productivity. In this method, a masterbatch cement and a standard cement are first mixed according to their respective weight percentages. Thereafter, considering the expansion, other raw materials such as a water reducing agent, an anti-crack fiber, a dispersible rubber powder, an accelerator, cellulose ether, and a graded sand are added according to their weight percentages. Finally, all raw materials are mixed. However, the ultra-early strength structure-reinforced mortar disclosed in said patent application is a type of ultra-early strength mortar that cannot reach a strength level of 30 MPa within 4 hours.

CN108275915A discloses a method for obtaining an early strength concrete, comprising the steps of mixing rubber powder, slag powder, fly ash, steel fiber and sulphate cement to obtain a composite admixture with gravel, mixing homogeneously while adding a resin and an initiator, and mixing while adding an accelerator to obtain a liquid mix.

The disclosure requires to dry and homogenously mix the composite admixture together with a sand to obtain a solid mix. Then the solid mix and the liquid mix are mixed to obtain a super-early strength concrete, and this super-early strength concrete is poured in the target area of repair works and vibrated for 60 seconds. Nevertheless, the super-early strength concrete prepared in said disclosure exhibits a compressive strength of 32.7 MPa after 3 hours, and only a compressive strength of 33.2 MPa after 6 hours. In addition, the use of gravel, known as coarse aggregate, has negative effects on the surface and internal structure of concrete.

Considering the current practices in the state of the art, there is a need in the manufacturing of early-setting high-strength cements in the cement and construction industry to develop cements that have higher compressive strengths and higher strength development rates than the cements currently used in the art, and that can reach such rates in a much shorter time, and that at the same time avoid the cracking problem associated with the concretes in the prior art.

### Summary of the Invention

As a solution to the problems of the prior art described in detail above, the present invention discloses an ultra-early strength concrete mix and a method for preparing this mix.

A few hours after being mixed, concrete components form a solid structure which has lost its plasticity during said timeframe. This is caused by hydration which, as used in the description, is a chemical reaction resulting from mixing cement and water. For providing a high performance cement, it is critical to optimize the development of, and the heat generated as a result of hydration, both of which are dependent upon water and temperature.

The early strength of a cement, as used in the description, is the 2- and 7-day compressive strength determined as per TS EN 196-1.

As used in the description, the durability of a concrete is defined as the ability of the concrete to resist internal and external factors, abrasion, or other harmful effects.

An object of the present invention is to realize an ultra-early strength concrete mix that, unlike the state of the art which can only provide an early strength time of 4-24 hours, provides an early strength time of less than 4 hours and exhibits approximately doubled strength values. In addition, said concrete mix shortens demold times in the manufacturing of prefabricated elements.

Another object of the present invention is to provide a method for preparing an ultra-early strength concrete mix, which allows to prepare a mortar very quickly by simply adding a liquid agent to an ready-mixed dry mix when the need for a quick repair arises in the defense industry, an airport runway concrete, earthquake zones, or a damaged structure like a road or bridge.

Another object of the present invention is to use an ultra-early strength concrete mix in the manufacturing of prefabricated elements in order to achieve fast demold times.

Another object of the present invention is to achieve a compressive strength of 35 MPa and more for a concrete within 1-2 hours unlike the state of the art wherein the 4-hour compressive strength of the concrete generally ranges between 20-30 MPa values.

Another object of the present invention is to minimize microcracks caused by high hydration temperatures.

Another object of the present invention is to eliminate the need for a costly and demanding practice such as a steam curing under pressure and without pressure.

Another object of the present invention is to realize an ultra-early strength concrete mix and a method for preparing such mix for enabling to prepare a concrete mix in a short time and carry out the necessary repair works in a practical manner under the conditions of a disaster.

Another object of the present invention is to improve the durability properties of concrete which are adversely affected by sulfate-containing materials.

### Detailed Description of the Invention

The present invention provides an ultra-early strength concrete mix comprising a fine aggregate, a cement material, and at least one set accelerator.

The ultra-early strength concrete mix according to the present invention comprises a dry mix and an externally added liquid agent.

In a primary embodiment of the present invention, the set accelerator is in the range of 50 to 150 parts by weight, and preferably 70 to 110 parts by weight, relative to the total weight of the ultra-early strength concrete mix. In particular, the inventors have found that the early high strength of a concrete containing the set accelerator in this range is optimized. Set accelerator is a chemical added for providing early setting. If it is below said range, the time to achieve early strength is prolonged; and on the other hand, if it is above said range, the level of heat generated due to hydration will increase and result in cracks in the concrete, ultimately causing poor appearance and loss of strength.

The "parts" term as used in the description refers to the amount of any component within a 1000-part concrete mix. In this sense, the total weight of concrete is considered to be 1000 parts. For example, a set accelerator in the range of 50 to 150 parts means that 50 to 150 parts of a 1000-part concrete consists of the set accelerator.

Thus, in the primary embodiment of the present invention, the set accelerator is 5 to 15 wt% and preferably 7 to 11 wt% of the ultra-early strength concrete mix.

According to the present invention, said set accelerator is selected from calcium chlorite, sodium nitrate, calcium nitrate, or lithium carbonate. According to the present invention, the fine aggregate is in the range of 250 to 450 parts by weight, and preferably 320 to 400 parts by weight, relative to the total weight of the ultra-early strength concrete mix. In other words, the fine aggregate is 25 to 45 wt% and preferably 32 to 40 wt% of the ultra-early strength concrete mix. The fine aggregate used in the present invention provides a smooth finish on the concrete surface with a specific gradation in the concrete mix.

In the embodiment of the present invention, the fine aggregate has a specific gradation with a maximum particle size of 1 mm. In other words, its particle size is preferably in the range of 1 nm to 1000 µm. Such decrease in the maximum diameter of the fine aggregate provides an increased strength for the concrete by reducing the gaps in the concrete. In addition, thanks to said range of fineness modulus of the aggregate, a higher strength value can be obtained by using less cement. In the primary embodiment of the invention, a quartz sand is preferably used as the fine aggregate. Quartz sand is a hard and crystalline mineral that consists of silicon and oxygen atoms and has a specific gravity of 2.65 g/cm³ and a hardness of 7.

The ultra-early strength concrete according to the present invention has an extremely high compressive strength as a result of the synergistic effect of its components. As evidenced by experiments, the ultra-early strength concrete mix of the present invention can achieve a compressive strength of 35 MPa and more within 1 to 2 hours. In addition, the super-early strength concrete provides a good flexural strength, reducing the amount of cement used.

According to the present invention, the weight ratio of the fine aggregate to the cement material is in the range of 0.8 to 1.2 and preferably of 0.9 to 1. Also, the cement material is in the range of 300 to 450 parts by weight, and preferably in the range of 330 to 400 parts by weight, relative to the total weight of the ultra-early strength concrete mix; in other words, the cement material is 30 to 45 wt% and preferably 33 to 40 wt% of the ultra-early strength concrete mix.

In the primary embodiment of the invention, calcium aluminate cements are preferably used as a cement material. Calcium aluminate cements show a high performance in terms of thermal durability, abrasion resistance, acid resistance, and early strength gain.

According to the present invention, said ultra-early strength concrete mix may further comprise at least one plasticizer. The plasticizer is in the range of 1 to 5 parts by weight, and preferably 1.6 to 2.2 parts by weight, relative to the total weight of the ultra-early strength concrete mix. The plasticizers used in the present invention can be in a solid or liquid form, and are preferably solid. If a liquid plasticizer will be used, it can be added together with water. The chemical admixture used as the plasticizer is produced as a polycarboxylate ether-based material (also known as superplasticizer). It provides a higher strength by decreasing the water-to-cement ratio, while maintaining the same workability as that of an admixture-free concrete. It is used for providing the same level of strength when the amount of cement in a concrete mix is decreased to reduce the heat generated by hydration. In the present invention, the plasticizer is in the form of a polycarboxylate-based powder. By combining with the liquid agent, it weakens the cohesive forces of the water in the concrete, which in turn lowers the surface tension of water, thus increasing the compressive strength of the concrete mix.

In a preferred embodiment of the invention, the ultra-early strength concrete mix may further comprise at least one additional material selected from the group consisting of a curing chemical, a binder, a microfiber reinforcement, a liquid agent, a mineral admixture, or a combination thereof.

According to the present invention, the microfiber reinforcement is in the range of 1 to 5 parts by weight relative to the total weight of the ultra-early strength concrete mix. The microfiber reinforcement is selected from the group consisting of steel, polyvinyl acetate (PVA), alkali resistant (AR)-glass fibers, or a mixture thereof. In the primary embodiment of the invention, the microfiber reinforcement is a micro steel fiber.

According to the present invention, the micronized mineral is in the range of 40 to 100 parts by weight relative to the total weight of the ultra-early strength concrete mix. The micronized mineral is selected from the group consisting of silica fume, rice husk ash, metakaolin, or a mixture thereof. In the preferred embodiment of the invention, said micronized mineral is silica fume.

According to the present invention, the curing chemical is in the range of 10 to 20 parts by weight relative to the total weight of the ultra-early strength concrete mix. Said curing chemical is selected from the group consisting of a paraffin emulsion, an acrylic dispersion, a hydrocarbon resin, an acrylic resin, silicate-based curing materials, or a mixture thereof. In one embodiment of the invention, curing can be performed by applying curing chemicals on the surface of concrete after forming an ultra-early strength concrete mix without any curing chemicals.

According to the present invention, the liquid agent is in the range of 80 to 140 parts by weight relative to the total weight of the ultra-early strength concrete mix. In the primary embodiment of the present invention, the liquid agent added to the dry mix for obtaining the ultra-early strength concrete mix is drinking water.

The table below shows the preferred weight ranges of concrete mix components:

**Table 1: Concrete mix components**

| Exemplary concrete mix components | Weight by mass (parts) | Weight by mass (%) |
|---|---|---|
| Fine aggregate | 320-400 | 32-40 |
| Cement material | 330-400 | 33-40 |
| Set accelerator | 70-110 | 7-11 |
| Liquid agent | 80-140 | 8-14 |
| Plasticizer | 1.6-2.2 | 0.16-0.22 |
| Mineral admixture | 40-100 | 4-10 |
| Curing chemical | 10-20 | 1-2 |
| Microfiber | 1-5 | 0.1-0.5 |

In the primary embodiment of the present invention, the concrete mix formed by combining the dry mix and the liquid agent has a good level of fluidity and a short working time. The initial fluidity of the concrete shows a fresh concrete's slump value of 10 to 15 cm after 5 minutes.

According to one embodiment of the present invention, a method of for preparing the ultra-early strength concrete mix of the invention is described below. Said method allows to prepare a mortar very quickly by simply adding a liquid agent to an ready-mixed dry mix when the need for a quick repair arises in the defense industry, an airport runway concrete, earthquake zones, or a damaged structure like a road or bridge. Surprisingly, the method for preparing the ultra-early strength concrete mix according to the present invention allows achieving a compressive strength of 35 MPa and more for a concrete mix within 1-2 hours.

The method for preparing the ultra-early strength concrete mix generally comprises the steps of:
a. mixing at least one cement material, at least one fine aggregate and at least one set accelerator to form a dry mix, wherein the weight ratio of the fine aggregate to the cement material is in the range of 0.8 to 1.2;
b. mixing the dry mix with at least one liquid agent for at least 5 minutes;
c. when the mix reaches a predetermined level of consistency, discontinuing the mixing operation and pouring the mix into a mold;
d. keeping the mix in the mold for a period of time ranging from 1 hour to 3 hours; and
e. removing the mix from the mold.

The fine aggregate, the liquid agent, the cement material and the set accelerator used in said method have the properties as disclosed throughout the description.

In the method according to the present invention, the predetermined level of consistency of the blended mortar in the step c) varies according to the intended field of application of said mortar. For example, a higher level of consistency is required for a repair mortar intended to be used in the repair of a vertical structural element damaged in an earthquake, while a lower level of consistency is required for a repair mortar intended to be used for a horizontal area in the repair of a damaged airport runway. What level of consistency is required in which field of application is known in the state of the art.

In the method according to the present invention, the dry mix in the step a) may further comprise at least one additional material selected from the group consisting of a plasticizer, a curing chemical, a binder, a microfiber reinforcement, a liquid agent, a mineral admixture, or a combination thereof. These additional components may have the properties as disclosed throughout the description.

In another embodiment of the present invention, the ultra-early strength concrete mix may also be obtained by the following method:
a) preparing and packaging in certain proportions a dry mix comprising at least one cement material, at least one fine aggregate and at least one set accelerator;
b) keeping the dry mix in dry and moisture-free packages until use;
c) right before use, blending the dry mix with a liquid agent in a mixer for at least 5 minutes depending upon the respective amounts thereof to be combined, wherein the blending time may vary depending on the respective amounts;
d) when the mix reaches a predetermined level of consistency, discontinuing the mixing operation and pouring the mix into a mold;
e) keeping the mix in the mold for a period of time ranging from 1 hour to 3 hours; and
f) removing the mix from the mold.

### EXAMPLE

### Example 1: Concrete mix components

| Exemplary concrete mix components | Weight by mass (g) |
|---|---|
| Quartz sand | 3600 |
| Calcium aluminate cement | 3240 |
| Calcium chlorite | 720 |
| Water | 1080 |
| Polycarboxylate-based plasticizer (Cemeste^{®} 98w) | 16.2 |
| Micro steel fiber | 20 |

### Preparation of Example 1:

A dry mix comprising as weight by mass 3600 g of quartz sand, 3240 g of calcium aluminate cement, 720 g of calcium chlorite, 16.2 g of polycarboxylate-based plasticizer, and 20 g of micro steel fiber is prepared and packaged. For preparing a mortar, 1080 g of drinking water is provided. The dry mix is kept in dry and moisture-free packages until use. Right before use, the specified amounts of the dry mix and the water are blended in a mixer for at least 5 minutes. When the mortar being blended reaches the desired level of consistency, casting is performed. 1 hour after casting, demolding is carried out.

When preparing the ultra-early strength concrete mix of the invention, the amount of materials used in the mix can be adjusted according to the needs of the intended field of application of said mix. Table 2 below shows the compressive strength levels reached within 1 hour with the mixes prepared according to such adjustments.

| Mix 1 1 hour (MPa) | Mix 2 1 hour (MPa) | Mix 3 1 hour (MPa) | Mix 4 1 hour (MPa) | Mix 5 1 hour (MPa) | Mix 6 1 hour (MPa) |
|---|---|---|---|---|---|
| 37.15 | 37.7 | 39.65 | 36.24 | 42.55 | 36.86 |

**Table 2: Compressive strength of ultra-early strength concrete within 1 hour**

| | Compressive Strength | Formulas |
|---|---|---|
| Mix 1 | 37.15 MPa | 400 g quartz aggregate/ 360 g calcium aluminate cement/ 80 g set accelerator/ 120 g water/ 2 g plasticizer |
| Mix 2 | 37.7 MPa | 400 g quartz aggregate/ 360 g calcium aluminate cement/ 80 g set accelerator/ 120 g water/ 2 g plasticizer |
| Mix 3 | 39.65 MPa | 400 g quartz aggregate/ 360 g calcium aluminate cement/ 80 g set accelerator/ 120 g water/ 1.5 g plasticizer |
| Mix 4 | 36.24 MPa | 400 g quartz aggregate/ 360 g calcium aluminate cement/ 80 g set accelerator/ 96.96 g water/ 24 g carbon nanotube/ 1.3 g plasticizer |
| Mix 5 | 42.55 MPa | 400 g quartz aggregate/ 360 g calcium aluminate cement/ 80 g set accelerator/ 120 g water/ 1.8 g powdered plasticizer |
| Mix 6 | 36.86 MPa | 400 g quartz aggregate/ 360 g calcium aluminate cement/ 80 g set accelerator/ 120 g water/ 1.8 g powdered plasticizer/ 1.1 g color pigment |

## Claims

1. An ultra-early strength concrete mix, **characterized in that** said concrete mix comprises at least one fine aggregate and at least one set accelerator in addition to at least one cement material, and that said set accelerator is 5 to 15 wt% of the ultra-early strength concrete mix.

2. An ultra-early strength concrete mix according to claim 1, **characterized in that** said set accelerator is 7 to 11 wt% of the ultra-early strength concrete mix.

3. An ultra-early strength concrete mix according to claim 1, **characterized in that** said fine aggregate is 25 to 45 wt% of the ultra-early strength concrete mix.

4. An ultra-early strength concrete mix according to claim 3, said fine aggregate is in the range of 320 to 400 parts by weight relative to the total weight of the ultra-early strength concrete mix.

5. An ultra-early strength concrete mix according to any one of the preceding claims, **characterized in that**; wherein the weight ratio of the fine aggregate to the cement material is in the range of 0.8 to 1.2.

6. An ultra-early strength concrete mix according to any one of the preceding claims, **characterized in that**; wherein the weight ratio of the fine aggregate to the cement material is in the range of 0.9 to 1.

7. An ultra-early strength concrete mix according to any one of the preceding claims, **characterized in that**; wherein the particle size of the fine aggregate is in the range of 1 nm to 1000 µm.

8. An ultra-early strength concrete mix according to any one of the preceding claims, **characterized in that**; wherein calcium aluminate cements are used as the cement material.

9. An ultra early strength concrete mix according to claim 1, **characterized in that** said ultra-early strength concrete mix further comprises at least one plasticizer.

10. An ultra-early strength concrete mix according to claim 9, **characterized in that** said plasticizer is 0.1 to 0.5 wt% of the ultra-early strength concrete mix.

11. An ultra-early strength concrete mix according to claim 9 or 10, **characterized in that** said plasticizer is a polycarboxylate-based powdered plasticizer.

12. An ultra-early strength concrete mix according to any one of the preceding claims, **characterized in that** said fine aggregate is a quartz sand.

13. An ultra-early strength concrete mix according to any one of the preceding claims, **characterized in that** said set accelerator is selected from the group consisting of calcium chlorite, sodium nitrate, calcium nitrate, and lithium carbonate.

14. An ultra-early strength concrete mix according to any one of the preceding claims, **characterized in that** said ultra-early strength concrete mix further comprises at least one additional material selected from the group consisting of a curing chemical, a binder, a microfiber reinforcement, a liquid agent, a mineral admixture, or a combination thereof.

15. An ultra-early strength concrete mix according to claim 14, **characterized in that** said microfiber reinforcement is in the range of 1 to 5 parts by weight relative to the total weight of the ultra-early strength concrete mix.

16. An ultra-early strength concrete mix according to claim 14 or 15, **characterized in that** the microfiber reinforcement is selected from steel, polyvinyl acetate (PVA), or alkali resistant (AR)-glass fibers.

17. A method for preparing an ultra-early strength concrete mix, comprising the steps of:
a. mixing at least one cement material, at least one fine aggregate and at least one set accelerator to form a dry mix, wherein the weight ratio of the fine aggregate to the cement material is in the range of 0.8 to 1.2;
b. mixing the dry mix with at least one liquid agent for at least 5 minutes;
c. when the mix reaches a predetermined level of consistency, discontinuing the mixing operation and pouring the mix into a mold;
d. keeping the mix in the mold for a period of time ranging from 1 hour to 3 hours; and
e. removing the mix from the mold.

18. A method for preparing an ultra-early strength concrete mix according to claim 17, wherein the step c) also involves curing performed by adding at least one curing chemical to the mix.

19. A method for preparing an ultra-early strength concrete mix according to claim 17 or 18, wherein the particle size of the fine aggregate is in the range of 1 nm to 1000 µm.

20. A method for preparing an ultra-early strength concrete mix according to any one of claims 17 to 19, wherein a quartz sand is used as the fine aggregate.

21. A method for preparing an ultra-early strength concrete mix according to any one of claims 17 to 20, wherein calcium aluminate cements are used as the cement material in the method for preparing an ultra-early strength concrete mix.

22. A method for preparing an ultra-early strength concrete mix according to any one of claims 17 to 21, wherein the set accelerator is calcium chlorite, sodium nitrate, calcium nitrate, or lithium carbonate.

23. A method for preparing an ultra-early strength concrete mix according to any one of claims 17 to 22, wherein the plasticizer is a polycarboxylate-based powdered plasticizer.

24. A method for preparing an ultra-early strength concrete mix according to any one of claims 17 to 23, wherein the liquid agent added to the dry mix is drinking water.
